# EUROPÄISCHE PATENTANMELDUNG

(11) **EP 4 002 657 A1**
(43) Veröffentlichungstag der Anmeldung: **25.05.2022**
(21) Anmeldenummer: 21207524.6
(22) Anmeldetag: 10.11.2021
(51) Int. Cl.: H02K 13/10, H01R 39/18

(54) **ELEKTROMOTOR MIT EINEM KOMMUTATOR**

(30) Priorität: 13.11.2020 DE 102020214322
(71) Anmelder: Brose Fahrzeugteile SE & Co. Kommanditgesellschaft, Bamberg, 96052 Bamberg (DE)
(72) Erfinder: PFALZGRAF, Helmut, 97246 Eibelstadt (DE); SAUM, Christian, 97320 Großlangheim (DE)
(74) Vertreter: FDST Patentanwälte

(57) **Zusammenfassung**

Die Erfindung betrifft einen Elektromotor (2) mit einem Kommutator (4), aufweisend mindestens eine Bürste (6) mit einer konkav gekrümmten Bürstenoberfläche (20) als Lauffläche für den Kommutator (4), wobei die Bürste (6) zwei parallele Einlaufrippen (22) aufweist, welche der Bürstenoberfläche (20) senkrecht emporstehen, wobei die Einlaufrippen (22) jeweils einen Krümmungsradius (RE) aufweisen, welcher größer ist, als ein Krümmungsradius (RK) einer konvexen Kommutatoroberfläche (18), wobei die Einlaufrippen (22) außermittig und beabstandet zueinander zu zwei gegenüberliegenden Flächenaußenkanten (24) der Bürstenoberfläche (20) versetzt angeordnet sind, und wobei die Einlaufrippen (22) in einem Neigungswinkel (a) zu den Flächenaußenkanten (24) geneigt angeordnet sind.

## Beschreibung

Die Erfindung betrifft einen Elektromotor, der mindestens eine, insbesondere federbelastete, Bürsten zur Anlage an einem Kommutator aufweist. Die Erfindung betrifft weiterhin eine Bürste für einen solchen Elektromotor.

Kraftfahrzeuge weisen heutzutage üblicherweise eine Anzahl an Verstellteilen, beispielsweise eine Sitzverstellung, ein betätigbares Schloss, Fensterheber und/ oder ein verstellbares Schiebedach auf, welche mittels eines jeweils zugeordneten Elektromotors als Verstellantrieb zwischen verschiedenen Stellpositionen verfahrbar sind.

In Abweichung zu einem bürstenlosen Elektromotor bestreichen bei einem mit einem wellenfesten Kommutator versehenen Elektromotor üblicherweise zwei oder auch mehrere Bürsten eine Anzahl von Kommutatorlamellen, die den elektrischen Strom auf die Wicklungen eines sich mit der Motorwelle drehenden Rotors übertragen. Mittels der Lamellen wird von Wicklung zu Wicklung eine Stromwendung (Kommutierung) erzeugt, die gegenüber üblicherweise feststehenden Magnetpolen des Stators ein Drehmoment auf die Motorwelle (Rotorwelle) erzeugt.

Bei einem Übergang der elektrischen Kontaktierung der Bürsten zu der in Drehrichtung jeweils nachfolgenden Kommutatorlamelle steht die Bürste auf zwei Kommutatorlamellen und schließt somit Wicklung kurz. Infolgedessen wird zu diesem Zeitpunkt der durch den Elektromotor fließende elektrische Strom (Motorstrom, Ankerstrom) erhöht. Dies dauert an, bis die Bürsten aufgrund der Drehung des Kommutators bzw. Rotors erneut lediglich mit jeweils einer einzigen der Kommutatorlamellen elektrisch kontaktiert sind. Diese periodische Erhöhung und Erniedrigung des Widerstandes prägt dem Motorstrom einen Wechselstromanteil auf. Dieser auch als "Stromwelligkeit" oder "Rippelstrom" (Rippelsignal) bezeichnete Wechselstromanteil wird hierbei häufig zur sensorlosen Bestimmung einer Rotationsgröße, wie insbesondere der Rotorposition oder der Rotordrehzahl, des Rotors beziehungsweise zu einer sensorlosen Positionsbestimmung eines mit dem Elektromotor angetriebenen Verstellteils verwendet.

Bei den Bürsten handelt es sich herkömmlicherweise um quaderartige, aus Kohlepulver - gegebenenfalls zusammen mit Metallpartikeln - gepresste Stäbe. Aufgrund des Schleifkontakts mit den Kommutatorlamellen unterliegen die Bürsten im Betrieb des Elektromotors einem Abrieb. Um trotz des Abriebs den Kontakt zwischen Bürste und Kommutator aufrecht zu erhalten, sind die Bürsten in der Regel in einem köcherartigen Bürstenschacht (Bürstenköcher) mittels mechanischer Federn unter Wirkung deren Federkraft verschiebbar gelagert, so dass eine automatische Nachstellung der Bürsten erfolgt.

Zur Vermeidung von Geräuschentwicklungen im Motorbetrieb ist ein Einlauf- und Einschleifradius der Bürstenoberfläche vorgesehen, welcher größer ist, als der Krümmungsradius des Kommutators. Um einen elektrisch und mechanisch zuverlässigen Schleifkontakt zu gewährleisten, ist es notwendig, dass ein Krümmungsradius der konkaven Lauffläche möglichst genau an den Krümmungsradius der konvexen Kommutatoroberfläche angepasst wird. Dies wird bei neuen Bürsten in der Regel mittels eines sogenannten Einschleif- oder Einlaufvorgangs realisiert, bei welchem durch Abrieb die Bürstenoberfläche an die Kommutatoroberfläche angepasst wird.

Insbesondere zu Betriebsbeginn, also beim erstmaliger Inbetriebnahme des Elektromotors, bevor die Bürsten eingeschliffen sind, kommt es aufgrund von Toleranzen der Bürstenführung und/oder der Kraftrichtung der (Bürsten-)Federn beim Wechsel der Dreh- oder Rotationsrichtung des Kommutators zu deformierten oder verformten Rippelsignalen, da die Kontaktfläche zwischen den Bürsten und den Kommutatorlamellen bei einem Verkippen der Bürsten reduziert wird. Dies erschwert die sensorlose Bestimmung der Rotationsgröße beziehungsweise der Position.

Zur Verbesserung der Rippelsignale während eines Einschleifens oder Einlaufens sind beispielsweise Stirngeometrien der Bürstenoberflächen denkbar. Beispielsweise offenbart die DE 10 2008 044 138 A1 eine Einlaufkontur der Bürste, bei welcher mittig auf der Bürstenoberfläche vorzugsweise drei Einlaufrippen angeordnet sind, welche unter einem Winkel zu einer Hauptachse der Bürstenoberfläche geneigt angeordnet sind. Die Einlaufrippen sind hierbei benachbart nebeneinander angeordnet und weisen einen Radius auf, welcher größer als der Kommutatorradius ist.

Der Erfindung liegt die Aufgabe zugrunde, einen besonders geeigneten Elektromotor anzugeben. Insbesondere soll eine Signalqualität eines Rippelsignals während eines Einschleifvorgangs einer Bürste verbessert werden. Der Erfindung liegt weiterhin die Aufgabe zugrunde, eine hierzu geeignete Bürste anzugeben.

Hinsichtlich des Elektromotors wird die Aufgabe mit den Merkmalen des Anspruchs 1 und hinsichtlich der Bürste mit den Merkmalen des Anspruchs 6 erfindungsgemäß gelöst. Vorteilhafte Ausgestaltungen und Weiterbildungen sind Gegenstand der Unteransprüche. Die im Hinblick auf den Elektromotor angeführten Vorteile und Ausgestaltungen sind sinngemäß auch auf die Bürste übertragbar und umgekehrt.

Der erfindungsgemäße Elektromotor ist insbesondere als ein Verstellantrieb für ein Kraftfahrzeug vorgesehen, sowie dafür geeignet und eingerichtet. Hierzu weist der Elektromotor einen um eine Motorachse drehbaren Kommutator auf. Der Kommutator weist eine Anzahl von Kommutatorlamellen auf, welche im Montagezustand von mindestens einer Bürste bestrichen sind. Die Bürste weist hierbei einen dem Kommutator zugewandten Bürstenkopf mit einer konkav gekrümmten Bürstenoberfläche als Bürstenkontaktfläche oder Lauffläche auf.

Unter einer konkav gekrümmten Bürstenoberfläche ist hierbei eine nach innen gewölbte Oberfläche zu verstehen. Eine Oberfläche eines Körpers ist hierbei konkav, wenn eine gerade Strecke zwischen beliebig wählbaren Punkten dieser Fläche komplett außerhalb des Körpers verläuft. Dabei sind andere Bereiche der Oberfläche außer Betracht zu lassen.

Im Nachfolgenden sind Angaben hinsichtlich der Raumrichtungen auch insbesondere in einem Koordinatensystem des Elektromotors angegeben. Unter "axial" oder einer "Axialrichtung" wird hier und im Folgenden insbesondere eine Richtung parallel (koaxial) zur Motorachse des Elektromotors, also senkrecht zu den Stirnseiten des Kommutators verstanden. Entsprechend wird hier und im Folgenden unter "radial" oder einer "Radialrichtung" insbesondere eine senkrecht (quer) zur Motorachse des Elektromotors orientierte Richtung entlang eines Radius des Kommutators beziehungsweise des Elektromotors verstanden. Unter "tangential" oder einer "Tangentialrichtung" wird hier und im Folgenden insbesondere eine Richtung entlang des Umfangs des Kommutators oder des Elektromotors (Umfangsrichtung, Azimutalrichtung), also eine Richtung senkrecht zur Axialrichtung und zur Radialrichtung, verstanden.

Die Bürstenoberfläche weist hierbei zwei Hauptachsen entlang der Axialrichtung und der Tangentialrichtung auf. Die Bürstenoberfläche ist hierbei insbesondere eine tangential gekrümmte Fläche, welche sich in Axialrichtung erstreckt. Die Breite der Bürstenoberfläche erstreckt sich hierbei in Tangentialrichtung, wobei die Höhe der Bürstenoberfläche in Axialrichtung orientiert ist.

An der Bürste sind genau zwei parallele Einlaufrippen einstückig, also einteilig oder monolithisch, angeformt, welche der Bürstenoberfläche senkrecht in Radialrichtung, also in Richtung des Kommutators beziehungsweise der Kommutatorlamellen, überstehen. Deren Krümmungs- oder Einschleifradius ist beispielsweise unter Bildung eines zumindest einlaufseitigen Spalts zum Kommutator größer als der Krümmungsradius der zylindrischen, konvex gekrümmten, Kommutatoroberfläche (Kommutatorradius), welche einer Kommutatorkontaktfläche oder Kommutatorlauffläche entspricht.

Unter einer konvex gekrümmten Kommutatoroberfläche ist hierbei eine nach außen gewölbte Oberfläche zu verstehen. Die Oberfläche eines Körpers ist hierbei konvex, wenn eine gerade Strecke zwischen beliebig wählbaren Punkten dieser Fläche komplett innerhalb des Körpers verläuft. Dabei sind andere Bereiche der Oberfläche außer Betracht zu lassen.

Die radial erhabenen Einlaufrippen sind außermittig und axial zueinander beabstandet an der Bürstenoberfläche angeordnet. Die Einlaufrippen sind hierbei zu den axial gegenüberliegenden Flächenaußenkanten der Bürstenoberfläche versetzt angeordnet, wobei sich die Einlaufrippen jedoch nicht über diese Flächenaußenkanten hinaus erstrecken. Dies bedeutet, dass die Einlaufrippen möglichst weit auseinander angeordnet sind. Mit anderen Worten ist eine möglichst große (axiale) lichte Weite zwischen den Einlaufrippen gebildet.

Erfindungsgemäß sind die etwa linienförmigen Einlaufrippen in einem Neigungswinkel zu den Flächenaußenkanten beziehungsweise Hauptachsen der Bürstenoberfläche geneigt angeordnet. Mit anderen Worten verlaufen die Einlaufrippen schräg oder gekippt auf der Bürstenoberfläche. Die Einlaufrippen weisen somit insbesondere sowohl eine tangentiale als auch axiale Komponente auf. Dadurch ist ein besonders geeigneter Elektromotor realisiert.

Die Erfindung geht dabei von der Überlegung aus, allein durch die Gestaltung der Bürstenkontaktfläche im Neuzustand der Bürste im bestimmungsgemäßen Motorbetrieb das Rippelsignal zu optimieren. Durch die geneigten Einlaufrippen wird beim Zusammenwirken mit dem Kommutator eine selbsttätige Ausrichtung der Bürste bewirkt, wodurch auch im nicht-eingeschliffenen Zustand ein geeignetes Rippelsignal erzeugbar ist. Dies bedeutet, dass durch die Einlaufrippen das Rippelsignal zu Beginn der Betriebszeit und auch bei einem Drehrichtungswechsel optimiert wird.

Da zur Vermeidung von Geräuschentwicklungen ein Einlauf- und Einschleifradius vorhanden sein sollte, der größer ist als der Krümmungsradius des Kommutators, sollten - in Axialrichtung gesehen - möglichst schmale Einlaufrippen vorgesehen sein, so dass hierdurch in entsprechend kurzer Betriebszeit ein Einschleifen vollzogen ist.

Unter einem "Einlaufen" oder "Einschleifen" der Bürste ist hierbei insbesondere eine Annäherung des bürstenseitigen Krümmungsradius an den kommutatorseitigen Krümmungsradius im Zuge - also während - eines automatischen Einschleifprozesses der Bürste bei erstmaliger Inbetriebsetzung des Elektromotors. Hierbei wird Bürstenmaterial der aus einem elektrisch leitenden Material, insbesondere staub- oder partikelförmige gepresste Kohle, bestehenden Bürste aufgrund deren schleifenden Anlage am Kommutator bzw. an dessen Kommutatorlamellen abgetragen. Der Einschleifprozess und damit der Einlaufprozess ist beendet, wenn die Krümmungsradien der konkaven Bürstenkontaktfläche und der konvexen Kommutatoroberfläche praktisch gleich sind und somit die kontaktierende Kreisbogenfläche der Bürste an die zylindrische Kontaktfläche des Kommutators angepasst ist. Im eingeschliffenen oder eingelaufenen Zustand sind die Einlaufrippen im Wesentlichen vollständig abgetragen.

Der Krümmungsradius der Bürste und/oder der Einschleifradius sollte nur unwesentlich größer sein als derjenige des Kommutators, so dass im Neuzustand der Bürste kein Kantenlauf der Bürste zum Öffnungsschlitz gegenüber dem Kommutator entstehen kann, die Axialkanten der zueinander beabstandeten Kommutatorlamellen also nicht mit der Bürste kollidieren. Vorzugsweise ergibt sich der Einschleifradius der Einlaufrippen hierbei im Wesentlichen aus einer Summe des Kommutatorradius und einem Kipptoleranzausgleich.

In einer geeigneten Ausführung erstrecken sich die Einlaufrippen im Wesentlichen über die gesamte tangentiale Breite der Bürstenoberfläche. Dadurch ist sichergestellt, dass auch bei einem Drehrichtungswechsel oder einer Drehrichtungsumkehr des Elektromotors beziehungsweise Kommutators ein zuverlässiges Einschleifen mit gutem Rippelsignal ermöglicht ist.

Der Neigungswinkel der Einlaufrippen kann hinsichtlich einer mechanischen Stabilität der Einlaufrippen, also ob das Bürstenmaterial bröselig oder krümelig ist, und/oder hinsichtlich eines Handlings und Hauptdimension der Bürste variiert werden. Dadurch werden durch Ausbrüche erzeugte Unstetigkeiten der Bürstenoberfläche oder Rippelsignale vermieden. Die Einlaufrippen sind in einer zweckmäßigen Ausgestaltung in einem spitzen Neigungswinkel gegenüber der Tangentialrichtung geneigt angeordnet. Dies bedeutet, dass der Neigungswinkel ein spitzer Winkel kleiner 45° ist. In einer vorteilhaften Weiterbildung ist der Neigungswinkel in einem Winkelbereich zwischen 2° und 10°, insbesondere zwischen 4° und 6°, dimensioniert. Vorzugsweise ist Neigungswinkel etwa 5°, also beispielsweise 4,5° bis 5,5°. Der Neigungswinkel kann hierbei positiv, so dass die Einlaufrippen über die Bürstenbreite axial von unten nach oben verlaufen, oder negativ, so dass die Einlaufrippen über die Bürstenbreite axial von oben nach unten verlaufen, sein.

In einer möglichen Ausbildung weisen die Einlaufrippen beispielsweise in einer radialen und axialen Schnittebene eine dreieckförmige Querschnittsform auf. Eine dem Kommutator zugewandte Spitze oder Ecke bildet hierbei die Anlage- oder Kontaktfläche zu dem Kommutatorlamellen, wodurch ein punkt- oder linienförmiger Berührungskontakt realisiert ist. Die Einlaufrippen beziehungsweise die Dreieckskanten sind hierbei möglichst steil angeordnet, so dass eine Rippenmaterialreduzierung realisiert ist.

Die erfindungsgemäße Bürste ist insbesondere als eine Kohlebürste ausgeführt, und ist für einen vorstehend beschriebenen Elektromotor vorgesehen, sowie dafür geeignet und eingerichtet. Die Bürste weist hierbei eine konkav gekrümmte Bürstenoberfläche mit zwei emporstehenden und zueinander parallelen Einlaufrippen auf. Die emporstehenden Einlaufrippen sind hierbei außermittig und beabstandet zueinander zu zwei gegenüberliegenden Flächenaußenkanten der Bürstenoberfläche hin versetzt und unter einem Neigungswinkel zu den Flächenaußenkanten geneigt angeordnet. Dadurch ist eine besonders geeignete Bürste für einen Elektromotor realisiert. Insbesondere ist somit eine Bürste realisiert, welche ein zuverlässiges und optimiertes Rippelsignal im Zuge eines Einschleifens oder Einlaufens bei einer erstmaligen Inbetriebnahme ermöglicht.

Nachfolgend werden Ausführungsbeispiele der Erfindung anhand einer Zeichnung näher erläutert. Darin zeigen:
- Fig. 1: in schematischer Darstellung ein Bürstensystem eines Elektromotors mit zwei Bürsten, die in jeweils einem Köcher über eine Bürstenandruckfeder gegen einen Kommutator gelagert sind,
- Fig. 2: in perspektivischer Ansicht die Bürste mit Blick auf deren zum Kommutator gerichteten Bürstenoberfläche mit zwei zueinander beabstandeten radial erhabenen Einlaufrippen im nicht eingeschliffenen Neuzustand der Bürste,
- Fig. 3: in Frontansicht die Bürste mit Blick auf die Bürstenoberfläche,
- Fig. 4: eine Schnittansicht der Bürste entlang der Schnittlinie IV-IV gemäß Fig. 3,
- Fig. 5: in Draufsicht die Bürste,
- Fig. 6: in Frontansicht ausschnittsweise die Bürste in einem Eckbereich VI gemäß Fig. 3, und
- Fig. 7: eine Schnittansicht der Bürste entlang der Schnittlinie VII-VII gemäß Fig. 3.

Einander entsprechende Teile sind in allen Figuren stets mit gleichen Bezugszeichen versehen.

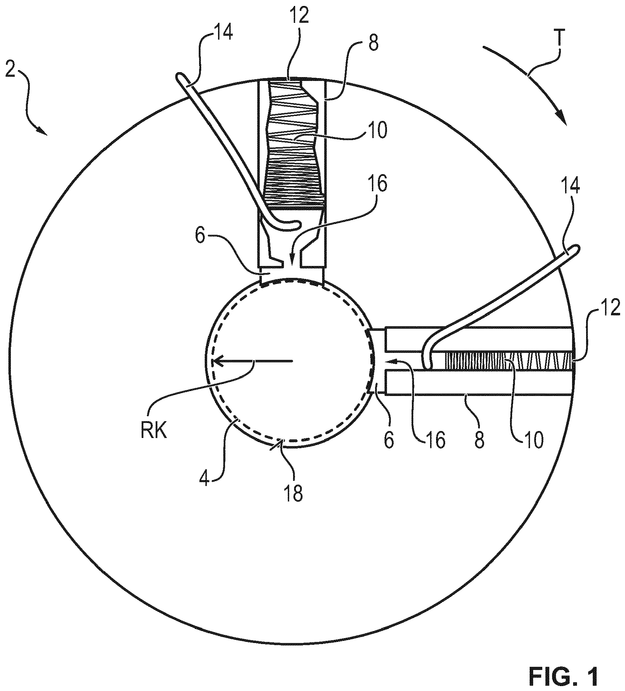

In der Fig. 1 ist ausschnittsweise ein Elektromotor 2 beziehungsweise dessen Kommutator- und Bürstensystem dargestellt. Das nicht näher bezeichnete Bürstensystem ist hierbei in Form einer Ringscheibe ausgeführt und konzentrisch um einen Kommutator 4 des Elektromotors 2 angeordnet. Das Bürstensystem umfasst zwei (Kohle-)Bürsten 6, welche in Kontakt mit dem Kommutator 4 stehen. Des Weiteren umfasst das Kommutator- und Bürstensystem zwei (Bürsten-)Köcher 8 als Bürstenschacht oder Bürstenhalter, in denen die Bürsten 6 radial zu dem Kommutator 4 und senkrecht zueinander geführt sind.

Unter "axial" oder einer "Axialrichtung A" wird hier und im Folgenden insbesondere eine Richtung parallel (koaxial) zur Motorachse des Elektromotors 2, also senkrecht zu den Stirnseiten des Kommutators 4 verstanden. Entsprechend wird hier und im Folgenden unter "radial" oder einer "Radialrichtung R" insbesondere eine senkrecht (quer) zur Motorachse des Elektromotors 2 orientierte Richtung entlang eines Radius RK des Kommutators 4 verstanden. Unter "tangential" oder einer "Tangentialrichtung T" wird hier und im Folgenden insbesondere eine Richtung entlang des Umfangs des Kommutators 4 oder des Elektromotors 2 (Umfangsrichtung, Azimutalrichtung), also eine Richtung senkrecht zur Axialrichtung A und zur Radialrichtung R, verstanden.

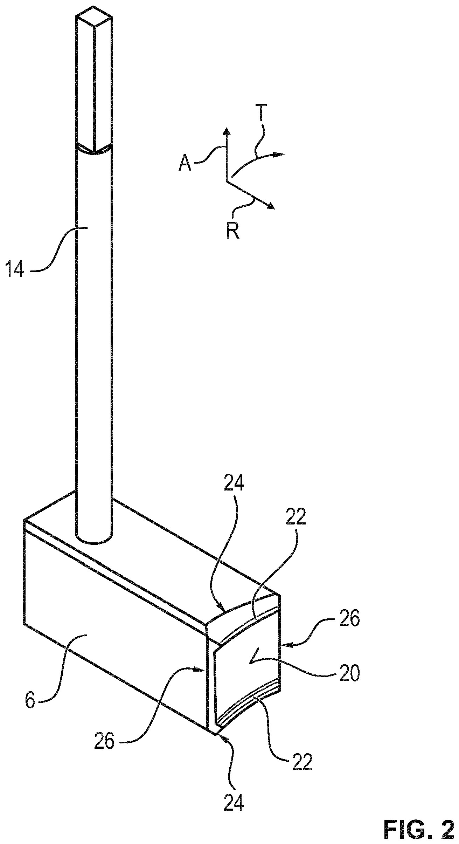

Um eine Antriebskraft zwischen den Bürsten 6 und dem Kommutator 4 zu erzeugen, umfasst das Kommutator- und Bürstensystem außerdem zwei Bürstenandruckfedern 10, welche jeweils in einem der Köcher 8 zwischen den Bürsten 6 und einem radial außenseitigen Köcherboden 12 einliegen. Zur Verdeutlichung ist in Fig. 2 einer der Köcher 8 durchbrochen dargestellt.

Die Bürsten 6 dienen in dem Elektromotor 2 zur Stromübertragung auf den im Betrieb des Elektromotors 2 rotierenden Kommutator 4 und damit auf die nicht näher dargestellten Wicklungen des Rotors des Elektromotors 2. Zur Stromübertragung weisen die Bürsten 6 an einer ihrer oberen Seitenflächen jeweils ein Anschlusskabel 14 auf. Zur einfachen Kontaktierung der Bürsten 6 sind die Anschlusskabel 14 jeweils durch einen in dem Köcher 8 verlaufenden Längsschlitz 16 herausgeführt.

Der Kommutator 4 trägt außenumfangsseitig eine Anzahl von nicht näher gezeigten Kommutatorlamellen, die sich in Axialrichtung A und somit parallel zur senkrecht in die Zeichenebene hinein verlaufenden (nicht näher bezeichneten) Motorachse erstrecken und zueinander unter Bildung von beispielsweise mit einem Isoliermaterial ausgefüllten Axialspalten umfangsseitig verteilt angeordnet sind. Die Kommutatorlamellen bilden eine kommutatorseitige, nachfolgend als Kommutatoroberfläche 18 bezeichnete Kontaktfläche mit der jeweiligen Bürste 6, wobei die Kommutatoroberfläche 18 aufgrund der Zylinderform des Kommutators 4 konvex gekrümmt ist. Der kommutatorseitige Krümmungsradius der Kommutatoroberfläche 18 entspricht hierbei dem Kommutatorradius RK bezeichnet.

Das dem Kommutator 4 zugewandte stirnseitige Ende der Bürste 6 ist nachfolgend auch als Bürstenkopf bezeichnet, wobei der Bürstenkopf mit einer konkaven Kopfmulde versehen ist, welche eine Bürstenoberfläche 20 als Kontaktfläche oder Lauffläche aufweist.

Nachfolgend ist der Aufbau der Bürste 6 anhand der Figuren 2 bis 7 näher erläutert.

Die Figuren 2 bis 7 zeigen hierbei einen Neuzustand der Bürste 6. Erkennbar weist die Bürste 6 zwei in Radialrichtung R erhabene, das heißt in Richtung des Kommutators 4 aus dem übrigen Kontaktbereichen der Bürstenkontaktfläche 20 herausragende Einlaufrippen 22 auf. Diese sind in Axialrichtung A zueinander beabstandet derart, dass zwischen den beiden Einlaufrippen 22 ein möglichst großer Abstand gebildet ist. Die Einlaufrippen 22 sind hierbei jeweils an einer azimutalen oder tangentialen Flächenaußenkante 24 der Bürste 6 angeordnet, so dass zwischen den Einlaufrippen 22 ein Kontaktbereich der Bürste 6 gebildet ist, welcher im Wesentlichen der Bürstenoberfläche entspricht.

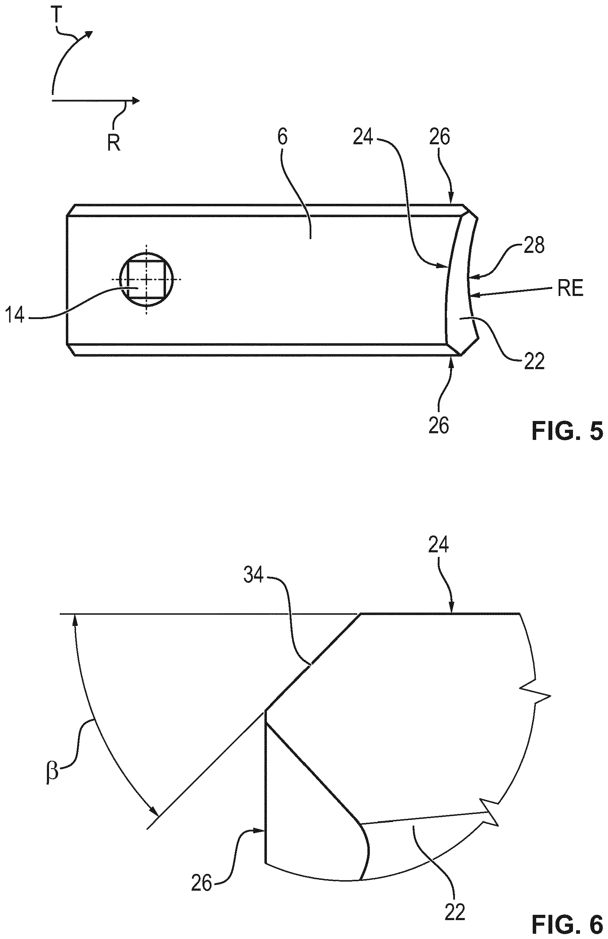

Die Einlaufrippen 22 erstrecken sich vollständig zwischen den beiden axial verlaufenden Flächenaußenkanten 26 der konkaven Bürstenoberfläche 26. Im Neuzustand bei vollständig montiertem Elektromotor 2 liegen die Einlaufrippen 22 lediglich mit mittigen oder zentralen Kontaktstellen 28 (Fig. 5) am Kommutator 4 beziehungsweise an dessen Kommutatorlamellen und damit an der konvexen Kommutatoroberfläche 18 an.

Die radial emporstehenden Einlaufrippen 22 weisen jeweils einen auch als Einlauf- bzw. Einschleifradius bezeichneten Krümmungsradius RE auf (Fig. 5), welcher größer ist, als der Krümmungsradius RK der Kommutatoroberfläche 18.

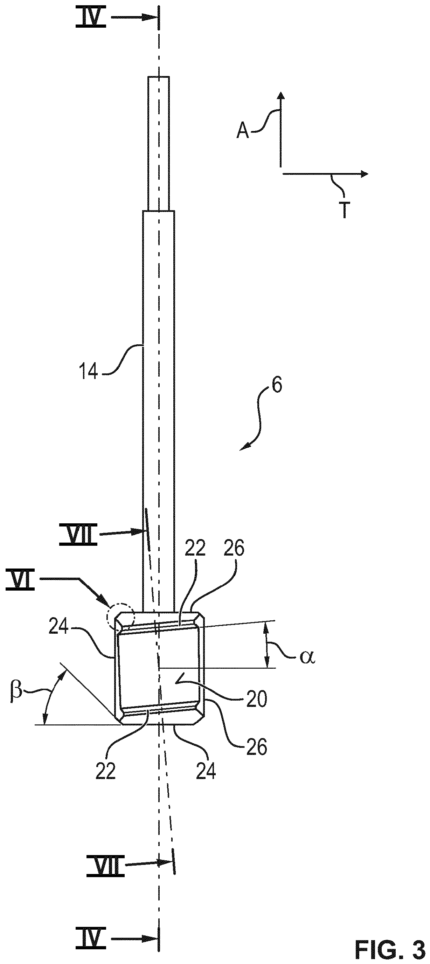

Wie insbesondere in der Fig. 3 ersichtlich ist, erstrecken sich die etwa linienförmigen Einlaufrippen 22 im Wesentlichen über die gesamte tangentiale Breite der Bürstenoberfläche 20. Die Einlaufrippen 22 verlaufen hierbei unter einem Neigungswinkel α gegenüber der Tangentialrichtung T der Bürstenoberfläche 20. Der Neigungswinkel α ist beispielsweise 5°.

Das Anschlusskabel 14 und die Bürste 6 sind beispielsweise über einen Stampfkontakt miteinander verbunden. Hierbei wird ein bürstenseitiges Kabelende 30 des Anschlusskabels 14 in das leitende Pulver der Bürste 6 eingesetzt und anschließend das Pulver zur Bürste 6 verfestigt. Das Anschlusskabel 14 ist beispielsweise als ein geflochtenes Stromseil (Zopfgeflecht) ausgeführt, und weist an dem den Kabelende 30 gegenüberliegenden Kabelende 32 ein Litzenende als Anschlussbereich auf.

Die stirnseitigen Eckbereiche des Bürstenkopfs sind mit jeweils einer in Fig. 6 näher gezeigten Kantenfase 34 versehen. Die Kantenfase 34 weist beispielsweise einen Fasenwinkel β von 45° ± 5° auf.

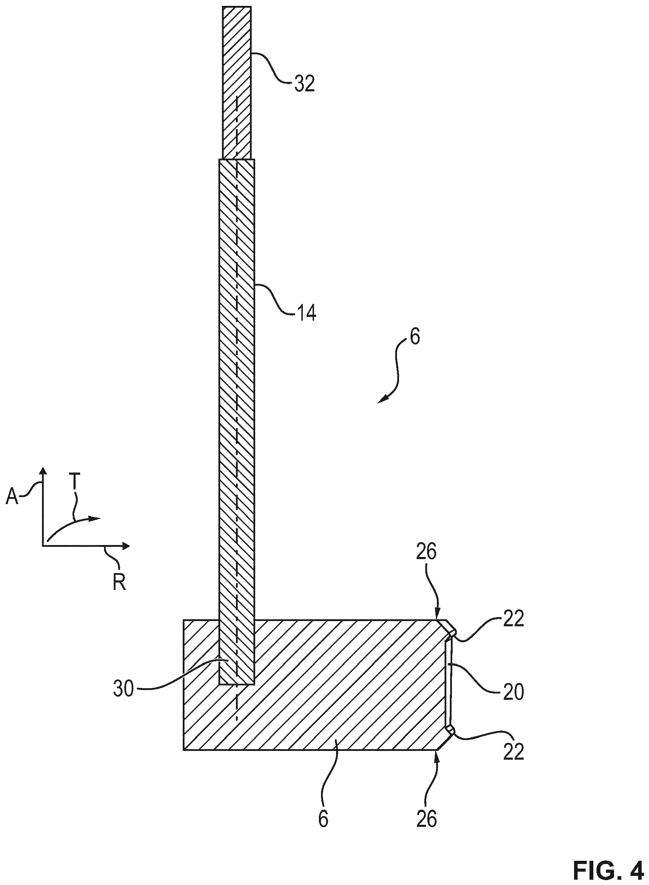

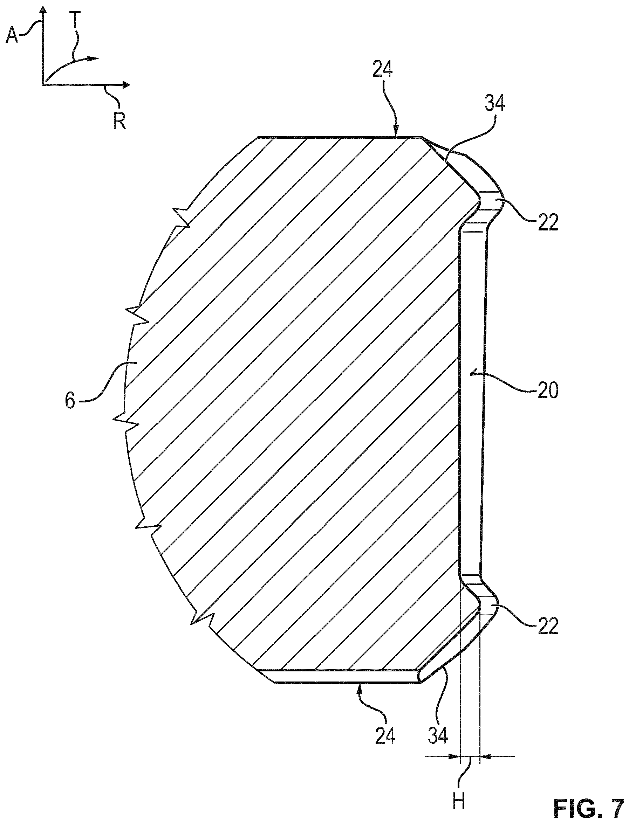

Die Einlaufrippen 22 weisen, wie beispielsweise in der Fig. 4 und Fig. 7 ersichtlich ist, im Wesentlichen eine dreieckförmige Querschnittsform auf. Insbesondere weisen die Einlaufrippen 22 eine Querschnittsform in Form eines rechtwinkeligen Dreiecks auf, wobei die Kantenfase 34 eine Kathete bildet. Die Einlaufrippen 22 weisen eine radiale Rippenhöhe H auf, mit welcher sie der Bürstenoberfläche 20 emporstehen.

In einer geeigneten Dimensionierung weist die Bürste 6 beispielsweise eine radiale Länge von etwa 8,8 cm und eine axiale Höhe von etwa 4,2 cm sowie eine tangentiale Breite von etwa 3,25 cm auf, wobei der Krümmungsradius RE beispielsweise auf 5,6 cm ± 0,5 cm bemessen ist. Die Einlaufrippen 22 weisen hierbei zum Beispiel eine Rippenhöhe H von etwa 0,16 cm auf.

Im Zuge des Einschleifvorgangs der Bürste 6 gewährleistet die durch die Einlaufrippen 22 gebildete Einlaufgeometrie der Bürstenkontaktfläche 20, dass die Bürste 6 im fortschreitenden Einlaufprozess einen zunehmenden Kontakt- oder Tragbereich aufweist, bis auch die axialen Flächenaußenkanten 24 der Bürste 6 tragend sind und demzufolge ein Einlaufspalt zwischen der Bürstenoberfläche 20 und der Kommutatoroberfläche 18 auf null (0) reduziert ist.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

### Bezugszeichenliste

- 2: Elektromotor
- 4: Kommutator
- 6: Bürste
- 8: Köcher
- 10: Bürstenanpressfeder
- 12: Köcherboden
- 14: Anschlusskabel
- 16: Längsschlitz
- 18: Kommutatoroberfläche
- 20: Bürstenoberfläche
- 22: Einlaufrippen
- 24: Flächenaußenkante
- 26: Flächenaußenkante
- 28: Kontaktstelle
- 30: Kabelende
- 32: Kabelende
- 34: Kantenfase

- A: Axialrichtung
- R: Radialrichtung
- T: Tangentialrichtung
- RK: Krümmungsradius/Kommutatorradius
- RE: Krümmungsradius/Einlaufradius
- α: Neigungswinkel
- β: Fasenwinkel
- H: Rippenhöhe

## Patentansprüche

1. Elektromotor (2) mit einem Kommutator (4), aufweisend mindestens eine Bürste (6) mit einer konkav gekrümmten Bürstenoberfläche (20) als Lauffläche für den Kommutator (4),
- wobei die Bürste (6) zwei parallele Einlaufrippen (22) aufweist, welche der Bürstenoberfläche (20) senkrecht emporstehen,
- wobei die Einlaufrippen (22) jeweils einen Krümmungsradius (RE) aufweisen, welcher größer ist, als ein Krümmungsradius (RK) einer konvexen Kommutatoroberfläche (18),
- wobei die Einlaufrippen (22) außermittig und beabstandet zueinander zu zwei gegenüberliegenden Flächenaußenkanten (24) der Bürstenoberfläche (20) versetzt angeordnet sind, und
- wobei die Einlaufrippen (22) in einem Neigungswinkel (a) zu den Flächenaußenkanten (24) geneigt angeordnet sind.

2. Elektromotor (2) nach Anspruch 1,
**dadurch gekennzeichnet,**
**dass** sich die Einlaufrippen (22) im Wesentlichen über die gesamte Breite der Bürstenoberfläche (20) erstrecken.

3. Elektromotor (2) nach Anspruch 1 oder 2,
**dadurch gekennzeichnet,**
**dass** der Neigungswinkel (a) ein spitzer Winkel ist.

4. Elektromotor (2) nach Anspruch 3,
**dadurch gekennzeichnet,**
**dass** der Neigungswinkel (a) in einem Winkelbereich zwischen 2° und 10°, insbesondere zwischen 4° und 6°, dimensioniert ist.

5. Elektromotor (2) nach einem der Ansprüche 1 bis 4,
**dadurch gekennzeichnet,**
**dass** die Einlaufrippen (22) eine dreieckförmige Querschnittsform aufweisen.

6. Bürste (6), insbesondere Kohlebürste, für einen Elektromotor (2) nach einem der Ansprüche 1 bis 5, aufweisend eine konkav gekrümmte Bürstenoberfläche (20) mit zwei emporstehenden Einlaufrippen (22), welche parallel zueinander sind,
- wobei die Einlaufrippen (22) außermittig und beabstandet zueinander zu zwei gegenüberliegenden Flächenaußenkanten (24) der Bürstenoberfläche (20) versetzt angeordnet sind, und
- wobei die Einlaufrippen (22) in einem Neigungswinkel (a) zu den Flächenaußenkanten (24) geneigt angeordnet sind.
